# EUROPÄISCHE PATENTSCHRIFT

(11) **EP 1 453 252 B1**
(45) Veröffentlichungstag und Bekanntmachung des Hinweises auf die Patenterteilung: **01.01.2014**
(21) Anmeldenummer: 04002717.9
(22) Anmeldetag: 06.02.2004
(51) Int. Cl.: H04L 12/70

(54) **Übertragung von Daten in einem schaltbaren Datennetz**
Transmission of data in a data switch network
Transmission de données dans un réseau de données commutable

(30) Priorität: 28.02.2003 DE 10308954
(43) Veröffentlichungstag der Anmeldung: 01.09.2004
(73) Patentinhaber: Siemens Aktiengesellschaft, 80333 München (DE)
(72) Erfinder: Feld, Joachim, 90451 Nürnberg (DE); Steindl, Günter, 92284 Poppenricht (DE); Weber, Karl, Dr., 90518 Altdorf (DE)

(56) Entgegenhaltungen:
- WO-A-00/11820
- GB-A- 2 187 917
- US-A1- 2002 087 716

## Beschreibung

Die Erfindung betrifft ein System und Verfahren zur Übertragung von Daten in einem schaltbaren Datennetz sowie einen Teilnehmer in einem schaltbaren Datennetz, insbesondere switched Ethernet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d. h. die Daten werden zu Paketen zusammengepackt und in dieser Form über das Datennetz an den entsprechenden Empfänger gesendet. Man spricht deshalb auch von Datenpaketen. Der Begriff "Übertragung von Daten" wird in diesem Dokument völlig synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmer jeweils mindestens eine Koppeleinheit geschaltet ist, die mit beiden Teilnehmern verbunden ist. Jede Koppeleinheit kann mit mehr als zwei Teilnehmern verbunden sein. Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder weitere Komponenten, die elektronische Daten mit anderen Komponenten austauschen, insbesondere verarbeiten. Koppeleinheiten sind z. B. sogenannte Switches, Hubs, Bridges, Router u. Ä. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt-Verbindungen, d. h. ein Teilnehmer kann alle anderen Teilnehmer des schaltbaren Datennetzes nur durch Weiterleitung der zu übertragenden Daten mittels einer oder mehrerer Koppeleinheiten erreichen. In verteilten Automatisierungssystemen, beispielsweise im Bereich der Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt.

Die DE 100 58 524 A1 beschreibt ein System und ein Verfahren, das sowohl eine echtzeitkritische als auch eine nicht echtzeitkritische Kommunikation in einem schaltbaren Datennetz, bestehend aus Teilnehmern und Koppeleinheiten, beispielsweise eines verteilten Automatisierungssystems, durch einen zyklischen Betrieb ermöglicht. Dabei existiert in einem so genannten Übertragungszyklus für alle Teilnehmer und Koppeleinheiten des schaltbaren Datennetzes jeweils wenigstens ein Bereich zur Übermittlung echtzeitkritischer und wenigstens ein Bereich zur Übermittlung nicht echtzeitkritischer Daten, wodurch die echtzeitkritische von der nicht echtzeitkritischen Kommunikation getrennt wird. Da alle Teilnehmer und Koppeleinheiten immer auf eine gemeinsame Zeitbasis synchronisiert sind, finden die jeweiligen Bereiche zur Übermittlung von Daten für alle Teilnehmer und Koppeleinheiten jeweils zum selben Zeitpunkt statt, d. h. die echtzeitkritische Kommunikation findet zeitgleich unabhängig von der nicht echtzeitkritischen Kommunikation statt und wird deshalb von dieser nicht beeinflusst. Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den für die nicht echtzeitkritische Kommunikation vorgesehenen Übertragungsbereich eines Übertragungszyklus verschoben und auch nur dort übertragen wird.

Aus der WO 00/11820 A1, der GB 2 187 917 A und der US 2002/087716 A1 sind verschiedene Verfahren zur Übertragung von Datentelegrammen über Netzwerke mit einem so genannten Shared-Medium bekannt, wobei die Datentelegramme unterschiedliche Prioritäten aufweisen können.

Der Erfindung liegt die Aufgabe zugrunde, die Übertragung von Daten unterschiedlicher Priorität in einem schaltbaren Datennetz zu verbessern.

Diese Aufgabe wird durch ein Verfahren zur Übertragung von Daten in einem schaltbaren Datennetz gelöst, bei welchem Verfahren Datentelegrammen Prioritäten zugeordnet werden, wobei die Datentelegramme jeweils einen Anfang und ein Ende aufweisen, wobei Datentelegramme, denen eine erste Priorität zugeordnet ist, während einer ersten Phase von ersten Teilnehmern zu zweiten Teilnehmern gesendet werden, wobei die erste Phase durch einen definierten Empfangszeitpunkt des Endes des jeweiligen Datentelegramms beim zweiten Teilnehmer gekennzeichnet ist.

Diese Aufgabe wird durch ein System zur Übertragung von Daten in einem schaltbaren Datennetz gelöst, mit Teilnehmern, welche Mittel zum Senden, Empfangen und/oder Weiterleiten von Datentelegrammen aufweisen, wobei die Datentelegramme jeweils einen Anfang und ein Ende aufweisen, und wobei den Datentelegrammen Prioritäten zugeordnet sind, wobei erste Teilnehmer während einer ersten Phase zum Senden von Datentelegrammen, denen eine erste Priorität zugeordnet ist, zu zweiten Teilnehmern vorgesehen sind, wobei die erste Phase durch einen definierten Empfangszeitpunkt des Endes des jeweiligen Datentelegramms beim zweiten Teilnehmer gekennzeichnet ist.

Diese Aufgabe wird durch einen Teilnehmer in einem schaltbaren Datennetz gelöst, welcher Mittel zum Senden, Empfangen und/oder Weiterleiten von Datentelegrammen aufweist, wobei die Datentelegramme jeweils einen Anfang und ein Ende aufweisen und wobei den Datentelegrammen Prioritäten zugeordnet sind, wobei der Teilnehmer als erster oder als zweiter Teilnehmer ausgebildet ist, wobei der erste Teilnehmer während einer ersten Phase zum Senden von Datentelegrammen, denen eine erste Priorität zugeordnet ist, zu zweiten Teilnehmern vorgesehen ist, wobei die erste Phase durch einen definierten Empfangszeitpunkt des Endes des jeweiligen Datentelegramms beim zweiten Teilnehmer gekennzeichnet ist.

Die Erfindung beruht auf der Erkenntnis, dass die Übertragung von Datentelegrammen, denen unterschiedliche Prioritäten zugeordnet wurden, innerhalb eines schaltbaren Datennetzes zu unbefriedigenden Ergebnissen führt, wenn die Übertragung der Datentelegramme nicht in geeigneter Weise in einer Reihenfolge in Abhängigkeit der jeweilig zugeordneten Priorität erfolgt. Insbesondere Unterschiede in der Länge der Datentelegramme, denen eine höchste Priorität zugeordnet wurde, führen zu teilweise erheblichen Verzögerungen bei der Übertragung von Datentelegrammen nächstniedrigerer Priorität. Gemäß der Erfindung wird eine erste Phase definiert, während der die Datentelegramme, denen eine erste Priorität zugeordnet ist, zwischen den Teilnehmern übertragen werden, wobei diese erste Phase durch einen definierten Empfangszeitpunkt des Endes des jeweiligen Datentelegramms beim empfangenden Teilnehmer gekennzeichnet ist. Die erste Phase ist also im Unterschied zum Stand der Technik nicht durch einen starren Anfangszeitpunkt gekennzeichnet, der zur Folge hat, dass sich die Empfangszeitpunkte der Telegrammenden abhängig von der jeweiligen Telegrammlänge unkoordiniert über die Zeit verteilen. Gemäß der Erfindung ist die erste Phase vielmehr durch einen definierten Empfangszeitpunkt des Endes des jeweiligen Datentelegramms beim empfangenden Teilnehmer gekennzeichnet, wobei mit "definierter Empfangszeitpunkt" ein im System bekannter, festgelegter, geplanter, unter den Teilnehmern abgestimmter Empfangszeitpunkt zu verstehen ist. Der definierte Empfangszeitpunkt des Endes des jeweiligen Datentelegramms führt somit zu einer optimierten Planung der Übertragung von Daten unterschiedlicher Priorität in einem schaltbaren Datennetz indem das Ende der ersten Phase zwischen den Teilnehmern abgestimmt festgelegt wird.

Gemäß einer vorteilhaften Ausgestaltung der Erfindung werden in einer zweiten Phase nach dem Ende der ersten Phase nur Datentelegramme gesendet, denen eine zweite Priorität zugeordnet ist. Dies bietet den Vorteil, dass nach in der ersten Phase gesendeten höchstprioren Datentelegrammen in der zweiten Phase Datentelegramme bevorzugt gesendet werden können, denen die nächstniedrigere Priorität zugeordnet ist. Somit wird während dieser zweiten Phase die Übertragung von niederprioren Datentelegrammen verhindert, welche ansonsten die Übertragung der höherprioren Datentelegramme behindern könnten. Nach Beenden der ersten Phase wird somit eine zweite Phase, die Wartezeit, gestartet, in welcher niederpriore Datentelegramme weiter blockiert werden können, aber höherpriore Datentelegramme bereits durchgelassen werden. Diese Wartezeit wird vorteilhafterweise so groß gewählt wie die Gesamtweiterleitungsdauer eines Datentelegramms vom Teilnehmer am Anfang einer Übertragungsstrecke bis zum Teilnehmer am Ende einer Übertragungsstrecke innerhalb des Datennetzes. Damit ermöglicht diese Ausgestaltung der Erfindung, dass höherpriore Datentelegramme ohne besondere Projektierung und aufwandsarm durch ein schaltbares Datennetz geschleust werden können.

Um die Übertragung und Weiterleitung von niederprioren Datentelegrammen innerhalb des Datennetzes zu ermöglichen, werden gemäß einer weiteren vorteilhaften Ausgestaltung der Erfindung in einer dritten Phase nach dem Ende der zweiten Phase Datentelegramme gesendet, denen eine beliebige Priorität zugeordnet ist. Nachdem Datentelegramme hoher und höchster Priorität in der zweiten bzw. in der ersten Phase übertragen worden sind, wird so eine dritte Phase zur Übertragung von Datentelegrammen beliebiger Priorität zur Verfügung gestellt.

Die Erfindung kann gemäß einer weiteren vorteilhaften Ausgestaltung zyklische Kommunikationsaufgaben innerhalb eines schaltbaren Datennetzes lösen, wenn die erste Phase zyklisch wiederholt wird. Ein Zyklus endet bzw. beginnt sinnvollerweise zum Zeitpunkt des definierten Endes der ersten Phase, d. h. zum definierten Empfangszeitpunkt des Endes des jeweiligen Datentelegramms beim empfangenden Teilnehmer.

Um eine möglichst kalkulierbare Übertragung von Daten, insbesondere von Echtzeitdaten, innerhalb eines Datennetzes zu ermöglichen, wird gemäß einer weiteren Ausgestaltung der Erfindung Datentelegrammen mit Echtzeitdaten die erste Priorität zugeordnet.

Nachfolgend wird die Erfindung anhand der in den Figuren dargestellten Ausführungsbeispiele näher beschrieben und erläutert.

Es zeigen:
- FIG 1: eine schematische Darstellung eines schaltbaren Datennetzes,
- FIG 2: eine prinzipielle Darstellung der Durchleitung von Soft-Realtime-Daten durch ein Isochrones-RealtimeNetz,
- FIG 3: eine schematische Darstellung einer Kommunikation zwischen Teilnehmern in einem konventionellen Datennetz und
- FIG 4: eine schematische Darstellung einer Kommunikation zwischen Teilnehmern in einem System gemäß einem Ausführungsbeispiel der Erfindung.

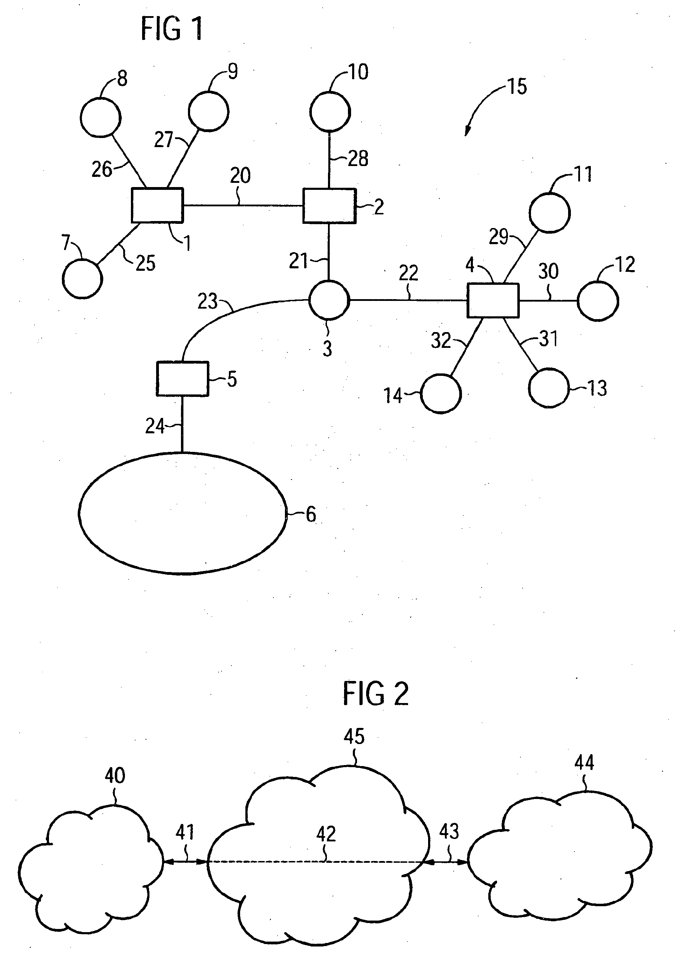

FIG 1 zeigt eine schematische Darstellung eines schaltbaren Datennetzes 15. Das Datennetz weist Teilnehmer 1 - 14 auf, welche über Kommunikationsverbindungen 20 - 32 miteinander kommunikativ gekoppelt sind. Die Teilnehmer 1 - 14 des Datennetzes 15 sind Kopplungselemente (Teilnehmer 1 - 5), z. B. so genannte Switches, ein Intra-/Internet (Teilnehmer 6) sowie weitere Teilnehmer 7 - 14, z. B. Komponenten eines Automatisierungssystems, welche über das Datennetz 15 miteinander und mit weiteren Komponenten kommunizieren können. Das Datennetz 15 ist ein geschaltetes Netzwerk, d. h. dass im Gegensatz zu einem so genannten Shared-Medium-Netzwerk die Teilnehmer an der Kommunikation im Netzwerk 15 nicht über ein gemeinsames Kommunikationsmedium miteinander kommunizieren, sondern über Punkt-zu-Punkt-Kommunikationsverbindungen 20 - 32. Die Kommunikation im Datennetz 15 wird im Ausführungsbeispiel durch die als Kopplungselemente, z. B. als Switches ausgeführte Teilnehmer 1 - 5 koordiniert. Ein Switch weist üblicherweise Mittel zum Senden, Empfangen und/oder Weiterleiten von Datentelegrammen auf, insbesondere Input-Ports mit Input-Buffern, eine Switch-Matrix, Output-Ports mit Output-Buffern, eine Adresse/Port-Zuordnungstabelle, eine Switch-Steuerungssoftware und eine Switch-Managementsoftware auf. Je nach dem Prinzip und der Implementierung dieser Elemente resultiert ein unterschiedliches Verhalten des Switch. Im Allgemeinen dient ein Switch als ein sehr schnelles Paketvermittlungssystem. Ein Paket oder ein Telegramm, das auf einem Input-Port ankommt, wird aufgrund seiner Zieladresse unverändert auf das richtige Output-Port durchgeschaltet. Der Switch analysiert das Paket bei seiner Ankunft, entscheidet aufgrund einer gespeicherten Adresstabelle, zu welchem Output-Port das Paket gehört und sendet es so bald wie möglich über dieses Output-Port ab. Switches sind üblicherweise auf Geschwindigkeit optimiert. Aus diesem Grund sind so viele Elemente wie möglich in schneller Hardware implementiert (im Gegensatz zu Routern, welche weitgehend Softwareimplementierungen sind). Im Ausführungsbeispiel leitet der Teilnehmer 1 von Teilnehmern 7 - 9 kommende Datenpakete über die Kommunikationsverbindung 20 an den Teilnehmer 2 weiter. Im umgekehrten Fall werden durch den Teilnehmer 1 vom Teilnehmer 2 kommende Datenpakete an den oder die jeweils adressierten Teilnehmer 7 - 9 weitergeleitet. Die Teilnehmer 1 - 5 leiten die Datentelegramme sequentiell, d. h. zeitlich nacheinander weiter. Das geschaltete Datennetz 15 kann über geeignete Koppelelemente mit Shared-Medium-Netzwerken und/oder mit einem Intra-/Internet 6 verbunden sein.

In der Automatisierungstechnik werden an die Echtzeitkommunikation verschiedene Anforderungen gestellt. So dürfen beispielsweise Aktualisierungszeiten bzw. Reaktionszeiten höchstens im Bereich weniger Millisekunden liegen. Unter der Aktualisierungszeit versteht man dabei die Zeitdauer, die nötig ist, um eine Variable in einer Applikation eines Teilnehmers 1 - 14 zu bilden, an einen weiteren Teilnehmer 1 - 14 über eine Kommunikationsverbindung 20 - 32 zu schicken und dort in der Anwendung bereitzustellen. Üblicherweise sind die folgenden Faktoren verantwortlich für die Aktualisierungsrate zwischen zwei Teilnehmern 1 - 14. Die Aktualisierungsrate ist umgekehrt proportional zur Durchschleusezeit von Daten bzw. Telegrammen zwischen den Teilnehmern 1 - 14. Die Durchschleusezeit setzt sich zusammen aus der Zeit zum Bereitstellen der Daten im sendenden Teilnehmer 1 - 14, der Zeit zur Bearbeitung des jeweiligen Kommunikations-Tags im sendenden Teilnehmer 1 - 14, der Zeit für die Übertragung über die Kommunikationsverbindung 20 - 32, der Zeit zur Bearbeitung des Kommunikations-Tags im empfangenden Teilnehmer 1 - 14 sowie der Zeit zur Verarbeitung der empfangenden Daten im Teilnehmer 1 - 14.

FIG 2 zeigt eine prinzipielle Darstellung der Durchleitung von so genannten Soft-Realtime-Daten (SRT-Daten, Realtime = Echtzeit) durch ein isochrones Realtime-Netz (IRT-Netz). Ein IRT-System ist z. B. in der oben genannten DE 100 58 524 A1 beschrieben. Die IRT-Kommunikation ist dabei dadurch gekennzeichnet, dass in einem Übertragungszyklus für alle Teilnehmer und Koppeleinheiten des schaltbaren Datennetzes jeweils wenigstens ein erster Bereich zur Übermittlung echtzeitkritischer und wenigstens ein zweiter Bereich zur Übermittlung nicht echtzeitkritischer Daten vorgesehen ist. Die zur Übermittlung in diesem ersten Bereich vorgesehenen echtzeitkritischen Daten werden im Folgenden als IRT-Daten bezeichnet. An diese IRT-Daten werden besonders hohe Echtzeit-Anforderungen gestellt, d. h. von diesen Daten wird ein deterministisches Verhalten erwartet. Unter SRT-Daten werden Echtzeit-Daten verstanden, an welche weniger hohe Echtzeit-Anforderungen als an die IRT-Daten gestellt werden. SRT-Daten können z. B. zyklische Echtzeit-Daten sein. Die beiden in FIG 2 dargestellten Datennetze 40, 44 dienen SRT-Daten als Kommunikationsnetz. Das dritte dargestellte Datennetz ist hingegen ein IRT-Datennetz 45, welches nach den Regeln und Anforderungen der isochronen Realtime-Kommunikation projektiert ist. Die SRT-Netze 40 und 44 sind mit dem IRT-Netz 45 über Kommunikationsverbindungen 41 bzw. 43 verbunden. Mit der gestrichelten Linie in FIG 2 soll die Durchleitung eines SRT-Datentelegramms 42 durch das IRT-Datennetz 45 dargestellt werden. Ein SRT-Datentelegramm 42 wird üblicherweise gemäß den Regeln des IRT-Datennetzes 45 durch dieses hindurch geleitet werden.

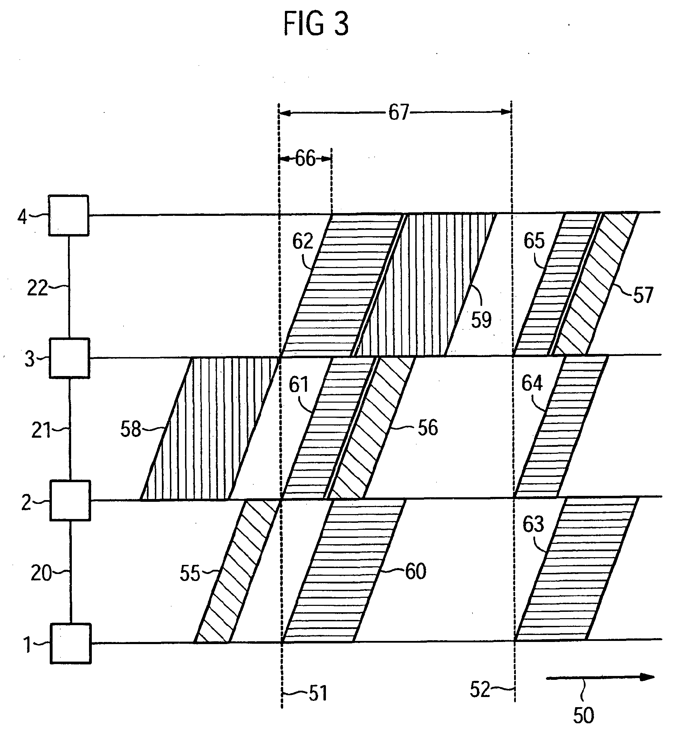

FIG 3 zeigt eine schematische Darstellung einer Kommunikation zwischen Teilnehmern in einem konventionellen Datennetz. Dargestellt sind vier Teilnehmer 1 - 4, welche über Punkt-zu-Punkt-Kommunikationsverbindungen linienförmig verbunden sind. Die vier Teilnehmer 1 - 4 könnten z. B. den als Kopplungselementen ausgebildeten Teilnehmern 1 - 4 im in FIG 1 dargestellten Datennetz 15 entsprechen und sind hier deshalb mit den gleichen Bezugszeichen bezeichnet. Des Weiteren schematisch dargestellt sind in einem Ort-Zeit-Diagramm Datentelegramme, welche zwischen den Teilnehmern 1 - 4 ausgetauscht werden. Die Datentelegramme, im Folgenden kurz Telegramme 55 bis 65 genannt, werden vom Teilnehmer 1 über die Kommunikationsverbindung 20 zum Teilnehmer 2, vom Teilnehmer 2 über die Kommunikationsverbindung 21 zum Teilnehmer 3 bzw. vom Teilnehmer 3 über die Kommunikationsverbindung 22 zum Teilnehmer 4 übertragen. Mit dem Zeitpfeil 50 wird die waagerechte Achse in Richtung voranschreitender Zeit des Ort-Zeit-Diagramms gekennzeichnet. Dementsprechend kennzeichnen die gestrichelten senkrechten Linien 51 und 52 jeweils einen diskreten Zeitpunkt im Ort-Zeit-Diagramm. Die schematische Darstellung im Ort-Zeit-Diagramm zeigt verschiedene Telegrammarten, gekennzeichnet durch unterschiedliche Schraffierung. Bei der hier dargestellten Kommunikation innerhalb eines IRT-Netzes starten IRT-Telegramme 60 - 62 und 63 - 65 jeweils zum gleichen Zeitpunkt 51 bzw. 52. SRT-Telegramme 55 - 57 werden ebenso durch das IRT-Datennetz durchgeleitet wie NRT-Telegramme 58, 59 (NRT-Telegrammme = Non Realtime-Telegramme, d. h. Telegramme, an deren Übertragung keine Echtzeitanforderungen gestellt werden).

Diverse Aufgaben bei der Internet-Ethernet-Kommunikation bedingen eine möglichst kalkulierbare Übertragung innerhalb eines Netzes. Die möglichen Kollisions-Wartesituationen auf den Leitungen (bei Shared-Medium-Netzen oder in den Switches bei geschalteten Netzen) führen zu einem nicht-deterministischen Verhalten. Die Einführung von Prioritäten für Echtzeitverkehr in einem Netz mit vielen Switches mit spontaner und zyklischer, aber unkoordinierter Kommunikation bewirkt zwar eine durchschnittlich befriedigende Übertragungszeit, aber es gibt Situationen, in denen hochpriore Nachrichten deutlich verzögert werden. Die bisher bekannten Verfahren setzen ein so genanntes Scheduling voraus. Damit werden Wartesituationen vermieden. Bei Shared-Medium-Netzen muss jeder Teilnehmer dieses Scheduling einhalten. Damit ist aber der Anschluss beliebiger Teilnehmer mit bereits existierender Hardware bzw. Software nicht möglich. Bei geschalteten Netzwerken genügt es, wenn alle beteiligten Switches dieses Scheduling erzwingen. Damit ist der Anschluss beliebiger Endteilnehmer möglich. Ein dafür bekanntes Verfahren ist die oben genannte IRT-Kommunikation. Dieses Verfahren ist für beliebige Topologien einsetzbar, es erfordert aber die Hinterlegung der Planungsdaten des deterministischen Kommunikationsverkehrs nicht nur bei den beteiligten Endknoten, sondern in allen beteiligten durchleitenden Switches. Darüber hinaus könnte zwar ein einfacher Knoten an ein IRT-System angehängt werden, nicht aber eine Gruppe von einfachen Geräten über einen konventionellen Switch. Darüber hinaus ist selbst bei einfachen Knoten eine aufwändige und zeitkritische spezielle Software zu entwickeln. Wenn man weitere Echtzeitdaten, insbesondere zyklische Echtzeitdaten, unkoordiniert in ein IRT-Netz einspeist, so ergeben sich durch die Blockierungen des normalen Nachrichtenverkehrs am Ende eines IRT-Zyklus Verzögerungen. Nach der IRT-Phase, die bei verschiedenen Teilnehmern unterschiedlich lang sein kann, kann bei einem Teilnehmer schon eine erneute niederpriore Nachricht gesendet werden, während bei einem anderen Teilnehmer noch eine IRT-Phase läuft.

Anhand FIG 3 soll im Folgenden dieses häufig auftretende Problem der Kommunikation innerhalb eines IRT-Datennetzes erläutert werden, insbesondere im Falle der in FIG 2 dargestellten Durchleitung von SRT-Telegrammen durch das IRT-Datennetz. Um die Echtzeit-Anforderungen, insbesondere bei der Übertragung von IRT-Datenpaketen, innerhalb eines geschalteten Datennetzes zu gewährleisten, erfolgt der zeitliche Ablauf der Übertragung der Datentelegramme üblicherweise geplant, d. h. gemäß einem so genannten Scheduling. Das Scheduling in einem IRT-Datennetz sieht vor, dass zu zuvor festgelegten Zeitpunkten 51 und 52, alle Teilnehmer 1 - 4 im Datennetz die höchstprioren IRT-Datentelegramme 60 - 62 bzw. 63 - 65 übertragen. Die diskreten Zeitpunkte 51 und 52 sind durch ein festgelegtes Zeitintervall 67 getrennt. Es ergeben sich somit sich zyklisch wiederholende Übertragungsintervalle, welche jeweils mit einer IRT-Phase zur Übertragung von IRT-Datentelegrammen beginnen, an welche sich eine zweite Phase anschließt, die zur Übertragung weniger zeitkritischer Datentelegramme vorgesehen ist. Das Scheduling verhindert, dass SRT-Telegramme 55 und NRT-Telegramme 58, 59 während der IRT-Phase zu Beginn eines Übertragungszyklus zwischen den Teilnehmern 1 - 4 übertragen werden. Im Beispiel der FIG 3 muss daher sowohl das SRT-Telegramm 55 als auch das NRT-Telegramm 58 zum Zeitpunkt 51 im Teilnehmer 2 bzw. 3 zwischengespeichert werden, um die Übertragung der höchstprioren IRT-Datentelegramme 61 bzw. 62 zu ermöglichen. Nach der Übertragung der IRT-Telegramme 60 - 62 und 63 - 65, kann die verbleibende Zeit innerhalb des Übertragungszyklus für die Übertragung von SRT-Telegrammen 55 - 57 bzw. NRT-Telegrammen 58, 59 genutzt werden. So wird hier nach dem NRT-Telegramm 61 das SRT-Telegramm 56 vom Teilnehmer 2 zum Teilnehmer 3 weitergeleitet, und entsprechend nach dem IRT-Telegramm 62 das NRT-Telegramm 59 vom Teilnehmer 3 zum Teilnehmer 4. Die Durchschleusezeiten durch die Teilnehmer 1 - 4 sowie die Übertragungszeiten über die Kommunikationsverbindungen 20 - 22 sind in FIG 3 durch die Zeitdifferenz 66 zwischen Sende- und Empfangszeitpunkt wiedergegeben. Um ein möglichst gutes Echtzeitverhalten des Kommunikationsnetzes zu erhalten, wäre es wünschenswert, dass neben den höchstprioren IRT-Telegrammen 60 - 65 auch die hochprioren SRT-Telegramme 55 - 57 möglichst verzögerungsfrei durch das Datennetz durchgeleitet werden. Das Scheduling kann im in FIG 3 dargestellten Beispiel allerdings nicht verhindern, dass durch die Übertragung des NRT-Datentelegramms 59 die Übertragung des SRT-Telegramms 56 im gleichen Übertragungszyklus blockiert wird. Der Teilnehmer 3 kann erst im nächsten Übertragungszyklus das SRT-Telegramm 57 an den Teilnehmer 4 weiterleiten, wobei zuerst das höherpriore IRT-Telegramm 65 übertragen wird. Die resultierende unerwünschte Reihenfolge der Übertragung im IRT-Datennetz ist eine Folge der durch das Scheduling üblicherweise vorgegebenen gemeinsamen Startzeitpunkte der IRT-Telegramme 60 - 62 und der unterschiedlichen Länge dieser IRT-Telegramme 60 - 62.

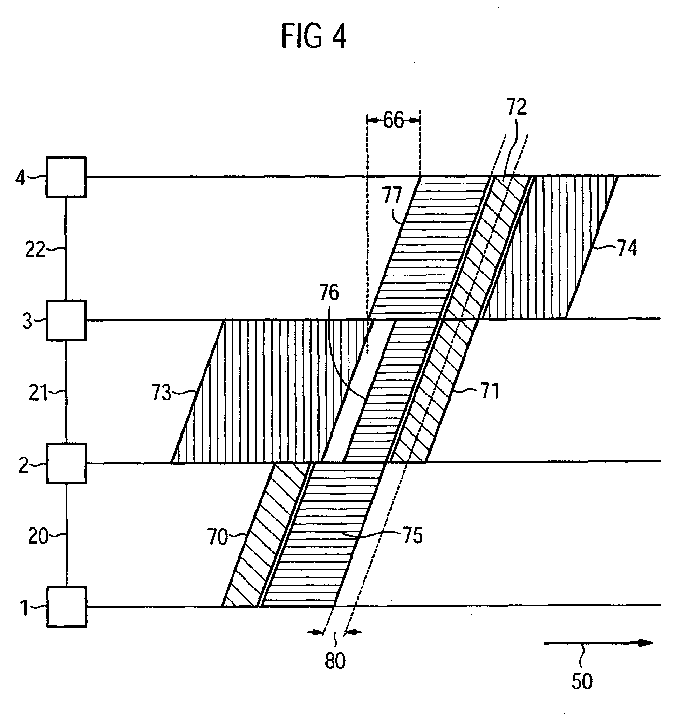

FIG 4 zeigt eine schematische Darstellung einer Kommunikation zwischen Teilnehmern in einem System gemäß einem Ausführungsbeispiel der Erfindung. FIG 4 zeigt entsprechend FIG 3 ein schaltbares Datennetz mit Teilnehmern 1 - 4, welche durch Kommunikationsverbindungen 20 - 22 verbunden sind sowie ein Ort-Zeit-Diagramm zur Veranschaulichung der Übertragung von Datentelegrammen 70 - 77. Im Gegensatz zur Ausführung des Datennetzes in FIG 3 erfolgt die Kommunikation im Datennetz gemäß FIG 4 nicht nach den zuvor beschriebenen üblichen Regeln eines IRT-Datennetzes. Auch bei dem hier dargestellten Ausführungsbeispiel der Erfindung erfolgt die Kommunikation zwischen den Teilnehmern 1 - 4 gemäß einem geplanten Zeitablauf, d. h. gemäß einem Scheduling. Zur Vermeidung der anhand des Beispiels der FIG 3 geschilderten Probleme beim Durchleiten von SRT-Telegrammen durch ein IRT-Datennetz wird jedoch ein entsprechend optimiertes Scheduling genutzt. Da die Längen der zu übertragenden Telegramme 70 - 77 im System und somit in den einzelnen Teilnehmern 1 - 4 bekannt sind, kann die Übertragung der IRT-Telegramme 75 - 77 derart geplant und durchgeführt werden, dass der Zeitpunkt des Übertragungsendes eines IRT-Telegramms 75 - 77 im jeweils empfangenden Teilnehmer 2 - 4 und damit auch der Zeitpunkt des Endes der ersten Phase definiert ist. Ein solchermaßen definierter Zeitpunkt des Endes der ersten Phase könnte z. B. für alle Teilnehmer derselbe Zeitpunkt sein, d. h. die Übertragung aller IRT-Telegramme 75 - 77 im Datennetz endet zum selben zuvor festgelegten Zeitpunkt (in FIG 4 nicht dargestellt). Werden zusätzlich die jeweiligen Durchschleusezeiten 66 berücksichtigt, kann ein im Ort-Zeit-Diagramm bündig erscheinendes Ende der Übertragung der jeweiligen IRT-Telegramme 75 - 77 erreicht werden. In diesem Fall sind also die definierten Zeitpunkte des Übertragungsendes eines IRT-Telegramms 75 - 77 im jeweils empfangenden Teilnehmer 2 - 4 und damit auch die Zeitpunkte des Endes der ersten Phase im empfangenden Teilnehmer jeweils um die Durchschleusezeiten 66 in Bezug auf den jeweiligen Zeitpunkt beim sendenden Teilnehmer versetzt. Im Anschluss an die so optimierte IRT-Phase ist eine Wartezeit 80 vorgesehen, während der die Weiterleitung von NRT-Telegrammen 74 verhindert wird. SRT-Telegramme 71, 72 werden in dieser Phase jedoch weitergeleitet. Die Teilnehmer 1 - 4 leiten empfangende SRT-Telegramme 71, 72 so schnell wie möglich im Cut-Through-Verfahren weiter. Durch das Cut-Through-Verfahren wird die Verzögerung der Telegramme beim Durchleiten auf ein Minimum reduziert. Dies wird dadurch erreicht, dass ein einlaufendes Telegramm 71, 72 durch den Teilnehmer 1 - 4 zeitgleich ausgewertet wird. Nach dem ordnungsgemäßen Erkennen der Zieladresse kann das Telegramm auf einem entsprechenden Port des jeweiligen Teilnehmers 1 - 4 schon wieder gesendet werden, obwohl es noch nicht vollständig empfangen wurde. Durch die end-isochrone Übertragung der IRT-Telegramme 75 - 77, insbesondere in Kombination mit der Definition einer Wartezeit 80 vor der Durchleitung von NRT-Telegrammen 73, 74, wird so die schnellstmögliche Durchleitung von hochprioren SRT-Telegrammen 70 - 72 durch ein IRT-System erreicht.

Zusammenfassend betrifft die Erfindung somit ein Verfahren und ein System zur Übertragung von Daten in einem schaltbaren Datennetz sowie einen Teilnehmer 1 - 4 in einem schaltbaren Datennetz. Um die Übertragung von Daten unterschiedlicher Priorität im schaltbaren Datennetz zu verbessern, wird vorgeschlagen, dass Datentelegrammen 70 - 77 Prioritäten zugeordnet werden, wobei die Datentelegramme 70 - 77 jeweils einen Anfang und ein Ende aufweisen, wobei Datentelegramme 75 - 77, denen eine erste Priorität zugeordnet ist, während einer ersten Phase von ersten Teilnehmern 1 - 3 zu zweiten Teilnehmern 2 - 4 gesendet werden, wobei die erste Phase durch einen definierten Empfangszeitpunkt des Endes des jeweiligen Datentelegramms 75 - 77 beim zweiten Teilnehmer 2 - 4 gekennzeichnet ist.

## Patentansprüche

1. Verfahren zur Übertragung von Daten in einem schaltbaren Datennetz, bei welchem Verfahren Datentelegrammen (70 - 77) Prioritäten zugeordnet werden, wobei die Datentelegramme (70 - 77) jeweils einen Anfang und ein Ende aufweisen, wobei Datentelegramme (75 - 77), denen eine erste Priorität zugeordnet ist, während einer ersten Phase eines Übertragungszyklus von ersten Teilnehmern (1 - 3) zu zweiten Teilnehmern (2 - 4) in dem schaltbaren Datennetz gesendet werden, wobei die erste Phase durch einen definierten Empfangszeitpunkt des Endes des jeweiligen Datentelegramms (75 - 77) beim zweiten Teilnehmer (2 - 4) gekennzeichnet ist.

2. Verfahren nach Anspruch 1,
**dadurch gekennzeichnet,**
**dass** in einer zweiten Phase nach dem Ende der ersten Phase nur Datentelegramme (70 - 72) gesendet werden, denen eine zweite Priorität zugeordnet ist.

3. Verfahren nach Anspruch 1 oder 2,
**dadurch gekennzeichnet,**
**dass** in einer dritten Phase nach dem Ende der zweiten Phase Datentelegramme (73, 74) gesendet werden, denen eine beliebige Priorität zugeordnet ist.

4. Verfahren nach einem der vorhergehenden Ansprüche,
**dadurch gekennzeichnet,**
**dass** die erste Phase zyklisch wiederholt wird.

5. Verfahren nach einem der vorhergehenden Ansprüche,
**dadurch gekennzeichnet,**
**dass** Datentelegrammen mit Echtzeitdaten die erste Priorität zugeordnet wird.

6. System zur Übertragung von Daten in einem schaltbaren Datennetz, mit Teilnehmern (1 - 4), welche Mittel zum Senden, Empfangen und/oder Weiterleiten von Datentelegrammen (70 - 77) aufweisen, wobei die Datentelegramme (70 - 77) jeweils einen Anfang und ein Ende aufweisen und wobei den Datentelegrammen (70 - 77) Prioritäten zugeordnet sind, wobei erste Teilnehmer (1 - 3) während einer ersten Phase eines Übertragungszyklus zum Senden von Datentelegrammen (75 - 77), denen eine erste Priorität zugeordnet ist, zu zweiten Teilnehmern (2 - 4) in dem schaltbaren Datennetz vorgesehen sind, wobei die erste Phase durch einen definierten Empfangszeitpunkt des Endes des jeweiligen Datentelegramms (75 - 77) beim zweiten Teilnehmer (2 -4) gekennzeichnet ist.

7. System nach Anspruch 6,
**dadurch gekennzeichnet,**
**dass** die ersten Teilnehmer (1 - 3) während einer zweiten Phase nach dem Ende der ersten Phase zum ausschließlichen Senden von Datentelegrammen (70 - 72), denen eine zweite Priorität zugeordnet ist, zu den zweiten Teilnehmern (2 - 4) vorgesehen sind.

8. System nach Anspruch 6 oder 7,
**dadurch gekennzeichnet,**
**dass** die ersten Teilnehmer (1 - 3) während einer dritten Phase nach dem Ende der zweiten Phase zum Senden von Datentelegrammen (73, 74), denen eine beliebige Priorität zugeordnet ist, zu den zweiten Teilnehmern (2- 4) vorgesehen sind.

9. System nach einem der Ansprüche 6 bis 8,
**dadurch gekennzeichnet,**
**dass** das System zur Übertragung von Echtzeitdaten im schaltbaren Datennetz vorgesehen ist, wobei den Echtzeitdaten die erste Priorität zugeordnet ist.

10. Teilnehmer (1 - 4) in einem schaltbaren Datennetz, welcher Mittel zum Senden, Empfangen und/oder Weiterleiten von Datentelegrammen (70 - 77) aufweist, wobei die Datentelegramme (70 - 77) jeweils einen Anfang und ein Ende aufweisen und wobei den Datentelegrammen (70 - 77) Prioritäten zugeordnet sind, wobei der Teilnehmer (1 - 4) als erster Teilnehmer (1 - 3) und/oder als zweiter Teilnehmer (2 - 4) ausgebildet ist, wobei der erste Teilnehmer (1 - 3) während einer ersten Phase eines Übertragungszyklus zum Senden von Datentelegrammen (75 - 77), denen eine erste Priorität zugeordnet ist, zu den zweiten Teilnehmern (2 - 4) in dem schaltbaren Datennetz vorgesehen ist, wobei die erste Phase durch einen definierten Empfangszeitpunkt des Endes des jeweiligen Datentelegramms (75 - 77) beim zweiten Teilnehmer (2 - 4) gekennzeichnet ist.

## Claims

1. Method for transmitting data in a switchable data network, in which method data telegrams (70 - 77) are assigned priorities, wherein the data telegrams (70 - 77) in each case have a beginning and an end, wherein data telegrams (75 - 77) to which a first priority has been assigned are sent during a first phase of a transmission cycle from first users (1 - 3) to second users (2 - 4) in the switchable data network, wherein the first phase is **characterised by** a defined receive time of the end of the respective data telegram (75 - 77) at the second user (2 - 4).

2. Method according to claim 1,
**characterised in that**
only data telegrams (70 - 72) to which a second priority has been assigned are sent in a second phase after the end of the first phase.

3. Method according to claim 1 or 2,
**characterised in that**
data telegrams (73, 74) to which any priority has been assigned are sent in a third phase after the end of the second phase.

4. Method according to one of the preceding claims,
**characterised in that**
the first phase is repeated cyclically.

5. Method according to one of the preceding claims,
**characterised in that**
data telegrams containing real-time data are assigned the first priority.

6. System for transmitting data in a switchable data network, with users (1 - 4) having means for sending, receiving and/or forwarding data telegrams (70 - 77), wherein the data telegrams (70 - 77) in each case have a beginning and an end and wherein the data telegrams (70 - 77) have been assigned priorities, wherein first users (1 - 3) are provided during a first phase of a transmission cycle for sending data telegrams (75 - 77) to which a first priority has been assigned to second users (2 - 4) in the switchable data network, wherein the first phase is **characterised by** a defined receive time of the end of the respective data telegram (75 - 77) at the second user (2 - 4).

7. System according to claim 6,
**characterised in that**
the first users (1 - 3) are provided during a second phase after the end of the first phase for exclusively sending data telegrams (70 - 72) to which a second priority has been assigned to the second users (2 - 4).

8. System according to claim 6 or 7,
**characterised in that**
the first users (1 - 3) are provided during a third phase after the end of the second phase for sending data telegrams (73, 74) to which any priority has been assigned to the second users (2 - 4).

9. System according to one of the claims 6 to 8,
**characterised in that**
the system is provided for transmitting real-time data in the switchable data network, wherein the first priority has been assigned to the real-time data.

10. User (1 - 4) in a switchable data network, the user having means for sending, receiving and/or forwarding data telegrams (70 - 77), wherein the data telegrams (70 - 77) in each case have a beginning and an end and wherein the data telegrams (70 - 77) have been assigned priorities, wherein the user (1 - 4) is embodied as a first user (1 - 3) and/or as a second user (2 - 4), wherein the first user (1 - 3) is provided during a first phase of a transmission cycle for sending data telegrams (75 - 77) to which a first priority has been assigned to the second users (2 - 4) in the switchable data network, wherein the first phase is **characterised by** a defined receive time of the end of the respective data telegram (75 - 77) at the second user (2 - 4).

## Revendications

1. Procédé de transmission de données dans un réseau de données commutable, procédé dans lequel des priorités sont affectées à des télégrammes ( 70 à 77 ) de données, les télégrammes ( 70 à 77 ) de données ayant respectivement un début et une fin, des télégrammes ( 75 à 77 ) de données, auxquels est affectée une première priorité, étant envoyés dans le réseau de données commutable pendant une première phase d'un cycle de transmission de premiers participants ( 1 à 3 ) à des deuxièmes participants ( 2 à 4 ), la première phase étant **caractérisée par** un instant de réception défini de la fin du télégramme ( 75 à 77 ) respectif chez le deuxième participant ( 2 à 4 ).

2. Procédé suivant la revendication 1,
**caractérisé**
**en ce que**, dans une deuxième phase après la fin de la première phase, on n'envoie que des télégrammes ( 70 à 72 ) de données, auxquels est affectée une deuxième priorité.

3. Procédé suivant la revendication 1 ou 2,
**caractérisé**
**en ce que**, dans une troisième phase après la fin de la deuxième phase, on envoie des télégrammes ( 73, 74 ) de données, auxquels est affectée une priorité quelconque.

4. Procédé suivant l'une des revendications précédentes,
**caractérisé**
**en ce que** l'on répète cycliquement la première phase.

5. Procédé suivant l'une des revendications précédentes,
**caractérisé**
**en ce que** l'on affecte la priorité à des télégrammes de données par des données en temps réel.

6. Système de transmission de données dans un réseau de données commutable ayant des participants ( 1 à 4 ), qui ont des moyens d'envoi, de réception et/ou d'acheminement de télégrammes ( 70 à 77 ) de données, les télégrammes ( 70 à 77 ) de données ayant respectivement un début et une fin et des priorités étant affectées aux télégrammes ( 70 à 77 ) de données, des premiers participants ( 1 à 3 ) étant, dans le réseau de données commutable pendant une première phase d'un cycle de transmission, prévus pour l'envoi de télégrammes ( 75 à 77 ) de données, auxquels est affectée une première priorité, à des deuxièmes participants ( 2 à 4 ), la première phase étant **caractérisée par** un instant de réception défini de la fin du télégramme ( 75 à 77 ) de données respectif chez le deuxième participant ( 2 à 4 ).

7. Système suivant la revendication 6,
**caractérisé**
**en ce que** les premiers participants ( 1 à 3 ) sont, pendant une deuxième phase après la fin de la première phase, prévus pour envoyer exclusivement aux deuxièmes participants ( 2 à 4 ) des télégrammes ( 70 à 72 ) de données, auxquels est affectée une deuxième priorité.

8. Système suivant la revendication 6 ou 7,
**caractérisé**
**en ce que** les premiers participants ( 1 à 3 ) sont, pendant une troisième phase après la fin de la deuxième phase, prévus pour l'envoi aux deuxièmes participants ( 2 à 4 ) de télégrammes ( 73, 74 ) de données, auxquels est affectée une priorité quelconque.

9. Système suivant l'une des revendications 6 à 8,
**caractérisé**
**en ce que** le système est prévu pour la transmission de données en temps réel, la première priorité étant affectée aux données en temps réel.

10. Participant ( 1 à 4 ) dans un réseau de données commutable, qui a des moyens d'envoi, de réception et/ou d'acheminement de télégrammes ( 70 à 77 ) de données, les télégrammes ( 70 à 77 ) de données ayant respectivement un début et une fin, et dans lequel des priorités sont affectées aux télégrammes (70 à 77 ) de données, dans lequel le participant ( 1 à 4 ) est constitué en premier participant ( 1 à 3 ) et/ou en deuxième participant ( 2 à 4 ), le premier participant ( 1 à 3 ) étant, pendant une première phase d'un cycle de transmission, prévu pour l'envoi aux deuxièmes participants (2 à 4) dans le réseau de données commutable de télégrammes ( 75 à 77 ) de données, auxquels est affectée une première priorité, la première phase étant **caractérisée par** un instant de réception défini de la fin du télégramme ( 75 à 77 ) de données respectif chez le deuxième participant ( 2 à 4 ).
